# FASCICULE DE BREVET EUROPEEN

(11) **EP 1 376 210 B1**
(45) Date de publication et mention de la délivrance du brevet: **21.09.2005**
(21) Numéro de dépôt: 02077492.3
(22) Date de dépôt: 21.06.2002
(51) Int. Cl.: G02F 1/1341, G02F 1/1339, G02F 1/1347, H01G 9/20

(54) **Cellule multicouche, notamment cellule d'affichage à cristaux liquides, ou cellule photovoltaique électrochimique**
Mehrlagige Zelle, insbesondere Flüssigkristallanzeigezelle oder elektrochemische photovoltaische Zelle
Multi-layer cell, in particular liquid crystal display cell or electrochemical, photovoltaic cell

(43) Date de publication de la demande: 02.01.2004
(73) Titulaire: ASULAB S.A., 2074 Marin (CH)
(72) Inventeur: Blanckaert, Nicolas, 2000 Neuchâtel (CH); Klappert, Rolf, 2000 Neuchâtel (CH)
(74) Mandataire: Ravenel, Thierry Gérard Louis

(56) Documents cités:
- GB-A- 2 049 214
- US-A- 4 086 398
- US-A- 5 856 211
- US-A1- 2002 014 303

## Description

La présente invention concerne le domaine des cellules multicouches, c'est-à-dire des cellules comprenant une multiplicité de substrats superposés et réunis deux à deux par des cadres de scellement délimitant autant de volumes étanches pour le confinement d'un milieu optiquement actif, ou dont les propriétés électriques peuvent changer sous l'effet d'une lumière incidente.

Dans le cas le plus simple, les cellules électro-optiques telles que les cellules à cristaux liquides, ou les cellules photovoltaïques électrochimiques comprennent deux substrats seulement, à savoir un substrat avant transparent et un substrat arrière également transparent ou non. On réalise sur ces deux substrats un réseau d'éléments conducteurs formant des électrodes et des pistes conductrices reliant ces électrodes à des plages de connexion. Les deux substrats sont réunis entre eux au moyen d'un cadre de scellement définissant un volume étanche dans lequel est emprisonné le milieu actif.

Les cellules électro-optiques sont des cellules d'affichage dont les caractéristiques optiques des cristaux liquides emprisonnés entre les deux substrats d'une telle cellule peuvent être modifiées par des tensions de commande appliquées aux électrodes. Quant aux cellules photovoltaïques électrochimiques, elles sont capables de convertir la lumière visible en électricité en exploitant l'effet photoélectrique qui apparaît dans un substrat semi-conducteur sensibilisé par un colorant.

Dans le cas simple où les cellules ne comprennent que deux substrats et une couche d'agent actif emprisonnée entre les deux, le remplissage des cellules ne pose pas de problème particulier. On ménage simplement dans les cadres de scellement une ouverture de remplissage par laquelle l'agent actif peut pénétrer dans le volume étanche délimité par ledit cadre de scellement. Le remplissage s'opère habituellement de la façon suivante : après avoir disposé la cellule et le cristal liquide dans une chambre à vide, on fait le vide dans le volume de confinement de la cellule, puis on plonge le côté de la cellule où se trouve l'ouverture de remplissage dans un récipient contenant l'agent actif. L'agent actif pénètre par capillarité, via le trou de remplissage, dans la cellule, aidé en cela par une augmentation de la pression dans la chambre. Lorsque le remplissage de la cellule est achevé, il ne reste plus qu'à sceller hermétiquement l'ouverture de remplissage.

Une autre solution connue consiste à percer un trou de remplissage dans l'un des substrats de la cellule. Après avoir fait le vide, on injecte par ce trou l'agent actif dans la cellule et, après que la cellule soit remplie, on obture ledit trou. Cette seconde solution s'avère particulièrement avantageuse dans la mesure où elle permet un remplissage des cellules par le dessus, ce qui permet de travailler avec des ensembles de cellules encore en lots.

Quelle que soit la solution retenue pour procéder au remplissage des cellules, on comprend bien que cette étape de la fabrication desdites cellules ne pose pas de problème majeur, en particulier en raison du fait que l'on n'utilise qu'un seul type d'agent actif. Par conséquent, même si l'agent actif, par exemple un cristal liquide, déborde du trou de remplissage et vient mouiller, notamment par capillarité, le pourtour de la cellule ou les substrats, il ne risque pas d'être pollué par un autre cristal liquide ou de détériorer une structure de la cellule déjà déposée.

Il n'en va par contre pas de même avec les cellules à plusieurs niveaux qui contiennent des agents actifs différents. Dans ce cas, le problème mentionné ci-dessus devient vite important et le risque de polluer l'un des agents actifs tel qu'un cristal liquide par un autre cristal liquide est assez élevé.

Imaginons en effet le cas, par exemple, d'une cellule d'affichage à cristaux liquides à deux niveaux comprenant deux couches de cristaux liquides différents. Une telle cellule peut être formée d'un substrat intermédiaire qui porte des électrodes sur ses deux faces et de deux substrats d'extrémité supérieur et inférieur. Chaque cellule est ainsi constituée par la réunion du substrat supérieur, respectivement inférieur, avec le substrat intermédiaire au moyen d'un cadre de scellement qui délimite une cavité étanche pour le confinement des cristaux liquides. Ces cadres de scellement comportent chacun un trou de remplissage, ces trous de remplissage étant préférentiellement ménagés sur un même côté de la cellule. Pour remplir la cellule, on applique ensuite deux tampons en mousse imbibés chacun du cristal liquide voulu contre les ouvertures de remplissage, puis on fait pénétrer les différents cristaux liquides par capillarité dans leurs cavités respectives. Après avoir retiré les tampons, il suffit de sceller hermétiquement les ouvertures de remplissage.

Le procédé décrit ci-dessus permet avantageusement de remplir simultanément les différents niveaux d'une cellule multicouche avec des cristaux liquides qui peuvent différer d'une couche à la couche suivante. Un tel procédé trouve néanmoins rapidement ses limites. En effet, pour la mise en oeuvre de ce procédé, il est toujours nécessaire de pouvoir disposer d'au moins un côté de la cellule dépourvu de toute plage de connexion dans la mesure où ces plages de connexion, qui servent à relier les électrodes de la cellule à un circuit extérieur de commande, sont habituellement ménagées le long d'un bord de ladite cellule où le substrat inférieur fait saillie par rapport au substrat supérieur. Ainsi, il serait difficile d'accéder à un trou de remplissage qui serait ménagé dans le cadre de scellement en un endroit où apparaissent les plages de connexion. Or, plus une cellule comporte de niveaux, plus le nombre de ses électrodes et donc de ses plages de connexion augmente. On peut donc se retrouver dans le cas où des plages de connexion débouchent le long de tous les côtés d'une cellule, de sorte que la technique de remplissage décrite ci-dessus ne peut plus être utilisée.

La présente invention a pour but de remédier aux problèmes susmentionnés ainsi qu'à d'autres encore en procurant une cellule multicouche telle qu'une cellule d'affichage à cristaux liquides dont le remplissage est simple et donc rapide et peu coûteux.

A cet effet, la présente invention concerne une cellule multicouche, notamment une cellule d'affichage à cristaux liquides, ou une cellule photovoltaïque électrochimique, ou une combinaison d'une cellule d'affichage à cristaux liquides et d'une cellule photovoltaïque électrochimique, cette cellule multicouche comprenant n substrats superposés, n étant un nombre entier supérieur ou égal à trois, ces substrats étant réunis deux à deux par des cadres de scellement délimitant (n-1) cavités étanches pour le confinement d'un milieu optiquement ou électro-optiquement actif, la surface supérieure du premier substrat et la surface inférieure du dernier substrat constituant les faces externes de la cellule, ladite cellule multicouche étant caractérisée en ce qu'elle comprend (n-1) trous de remplissage ménagés, au moins pour partie, en dessus ou en dessous de la cellule, ces (n-1) trous de remplissage communiquant chacun avec une cavité différente et traversant au moins une cavité pour atteindre celle des cavités avec laquelle ils sont en liaison, lesdits (n-1) trous de remplissage étant isolés de la ou des cavités qu'ils traversent.

Grâce à ces caractéristiques, la présente invention procure une cellule multicouche qui peut être remplie avec différents liquides tels que différents types de cristaux liquides avec un risque limité, si ce n'est nul, de voir ces liquides se mélanger. Par ailleurs, le remplissage des différentes couches de la cellule peut s'effectuer simultanément, ce qui permet de réduire les temps de fabrication et le nombre de manipulations de ladite cellule. Un autre avantage de la présente invention peut être vu dans le fait que, comme le remplissage des cellules ne se fait plus par le côté des cellules mais par le dessus, les cellules peuvent être pratiquement terminées en lot avant le découpage, ce qui concourt encore davantage à la réduction des temps de fabrication et donc à la diminution du prix de revient de ces cellules. Enfin, des plages de contact pour la connexion des électrodes d'une cellule à un circuit électrique externe de commande ou d'alimentation peuvent être ménagées le long de tous les côtés de ladite cellule.

Selon un autre mode de réalisation, la présente invention concerne également une cellule multicouche du genre susdécrit, caractérisée en ce qu'elle comprend (n-1) trous de remplissage, l'un au moins de ces trous de remplissage étant percé à travers le premier ou le dernier substrat et communiquant avec la cavité délimitée par le premier, respectivement le dernier substrat, et le substrat en regard, les trous de remplissage restants étant ménagés, au moins pour partie, en dessus ou en dessous de la cellule, ces trous de remplissage communiquant chacun avec une cavité différente et traversant au moins une cavité pour atteindre celle des cavités avec laquelle ils sont en liaison, lesdits trous de remplissage restants étant isolés de la ou des cavités qu'ils traversent.

Selon une première variante de réalisation, les trous de remplissage sont ménagés à l'intérieur du périmètre des cadres de scellement et sont entourés d'une cloison également en matière de scellement qui les isole de façon étanche des cavités qu'ils traversent.

Selon une seconde variante de réalisation, les trous de remplissage sont formés par des portions de microtube qui traversent les différentes cavités jusqu'à ce qu'elles débouchent dans la cavité avec laquelle elles sont destinées à communiquer. L'intérêt principal de cette variante de réalisation réside dans le fait que, grâce à l'emploi de microtubes, les trous de remplissage sont automatiquement rendus étanches vis-à-vis des cavités qu'ils traversent, sans qu'il soit nécessaire de prévoir un agencement particulier des cadres de scellement. De plus, l'emprise des trous de remplissage à la surface de la cellule est réduite, de sorte que la surface active de ladite cellule est plus grande.

D'autres caractéristiques et avantages de la présente invention ressortiront plus clairement de la description détaillée qui suit d'un exemple de réalisation d'une cellule multicouche conforme à l'invention, cet exemple étant donné à titre purement illustratif et non limitatif seulement en liaison avec le dessin annexé sur lequel :
- la figure 1 est une vue en perspective et par transparence d'une cellule multicouche à cristaux liquides comprenant quatre substrats superposés réunis deux à deux par des cadres de scellement qui délimitent trois cavités étanches pour le confinement des cristaux liquides, chacune de ces trois cavités étant en liaison avec un trou de remplissage distinct, l'un de ces trous débouchant directement dans la cavité à remplir;
- la figure 2 est une vue analogue à celle de la figure 1 sur laquelle tous les trous de remplissage traversent au moins une cavité avant d'atteindre celle des cavités avec laquelle ils sont en liaison;
- la figure 3 est une vue en coupe schématique d'une cellule multicouche formée de trois cellules individuelles collées les unes sur les autres;
- la figure 4 est une vue analogue à celle de la figure 1 sur laquelle des portions de microtube traversent les différentes cavités jusqu'à ce qu'elles débouchent dans la cavité avec laquelle elles sont destinées à communiquer, et
- la figure 5 est une vue analogue à celle de la figure 1 sur laquelle les trous de remplissage sont ménagés à l'extérieur du périmètre des cadres de scellement.

La présente invention procède de l'idée générale inventive qui consiste à prévoir autant de trous de remplissage qu'une cellule comporte de couches d'un agent actif liquide, chacun de ces trous de remplissage communiquant avec une couche donnée à l'exclusion de toutes les autres. Ces trous de remplissage étant ménagés, au moins pour partie, d'un côté ou de l'autre de la cellule, cette dernière peut être remplie par le dessus, ce qui simplifie considérablement les opérations de remplissage et permet pratiquement de terminer les cellules en lot avant découpage. D'autre part, comme les trous de remplissage ne sont pas disposés le long d'un ou plusieurs bords de la cellule, on peut faire déboucher les pistes conductrices qui permettent de connecter les électrodes de ladite cellule à un circuit électrique externe d'alimentation ou de commande sur tous les côtés de celle-ci.

La présente invention va être décrite en liaison avec une cellule d'affichage multicouche de type à cristaux liquides. Il va bien entendu de soi que la présente invention n'est pas limitée à un tel type de cellule et qu'elle s'applique de manière identique à tout type de cellule multicouche renfermant entre ses substrats une matière sensible qui peut changer de propriétés physiques, notamment optiques, sous l'effet d'une tension appliquée aux électrodes, ou changer de propriétés électriques sous l'effet d'une contrainte ou d'un rayonnement lumineux incident.

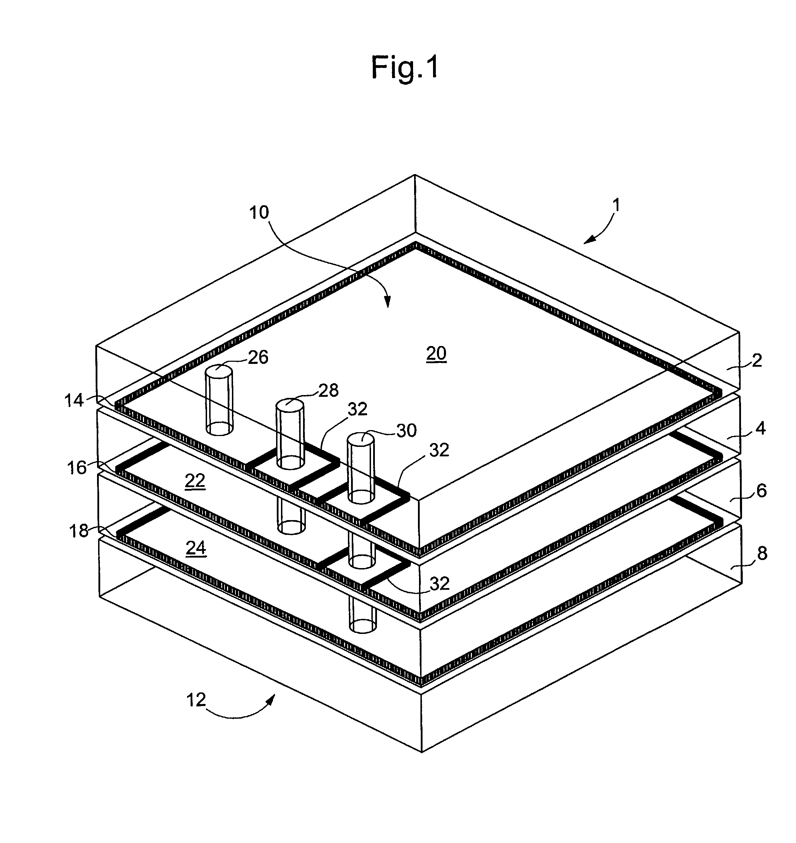

La figure 1 est une vue en perspective et en transparence d'une cellule d'affichage multicouche à cristaux liquides conforme à la présente invention. Désignée dans son ensemble par la référence numérique générale 1, cette cellule d'affichage comprend quatre substrats superposés 2, 4, 6 et 8 qui peuvent être réalisés en verre ou en un autre matériau transparent tel que du plastique. On notera que le dernier substrat 8 peut être transparent ou non selon que la cellule d'affichage 1 est transmissive ou réflective. La surface supérieure 10 du premier substrat 2 et la surface inférieure 12 du dernier substrat 8 constituent les faces externes de ladite cellule 1.

Les substrats 2 à 8 sont réunis deux à deux par des cadres de scellement 14, 16 et 18 qui délimitent chacun une cavité étanche, respectivement 20, 22 et 24, pour le confinement des cristaux liquides. Plus précisément, le premier cadre de scellement 14 réunit les substrats 2 et 4, le deuxième cadre de scellement 16 réunit les substrats 4 et 6, et le troisième cadre de scellement 18 réunit les substrats 6 et 8.

Conformément à un premier mode de réalisation de l'invention, la cellule d'affichage 1 comprend trois trous de remplissage 26, 28 et 30 qui communiquent chacun avec l'une des trois cavités 20, 22 ou 24 respectivement. Comme on peut le voir sur la figure 1, les trois trous de remplissage 26, 28 et 30 sont ménagés du même côté 10 de la cellule 1, le premier trou de remplissage 26 étant percé à travers le premier substrat 2 et communiquant avec la cavité 20 délimitée par les premier et deuxième substrats 2 et 4 et le cadre de scellement 14, tandis que le second trou de remplissage 28, percé à travers les premier et deuxième substrats 2 et 4, traverse de manière étanche la première cavité 20 et débouche dans la deuxième cavité 22, et que le troisième trou de remplissage 30, percé à travers les premier, deuxième et troisième substrats 2, 4 et 6, traverse de manière étanche les première et deuxième cavités 20 et 22 et débouche dans la troisième cavité 24. Bien entendu, selon une variante, ce troisième trou de remplissage pourrait être percé à travers le dernier substrat et déboucher directement dans la troisième cavité 24.

Les trous de remplissage 26, 28 et 30 sont ménagés à l'intérieur du périmètre des cadres de scellement 14, 16 et 18 et sont entourés de cloisons 32, également réalisés en matière de scellement, qui les isolent de façon étanche des cavités qu'ils traversent et dans lesquelles ces trous de remplissage ne doivent pas déboucher.

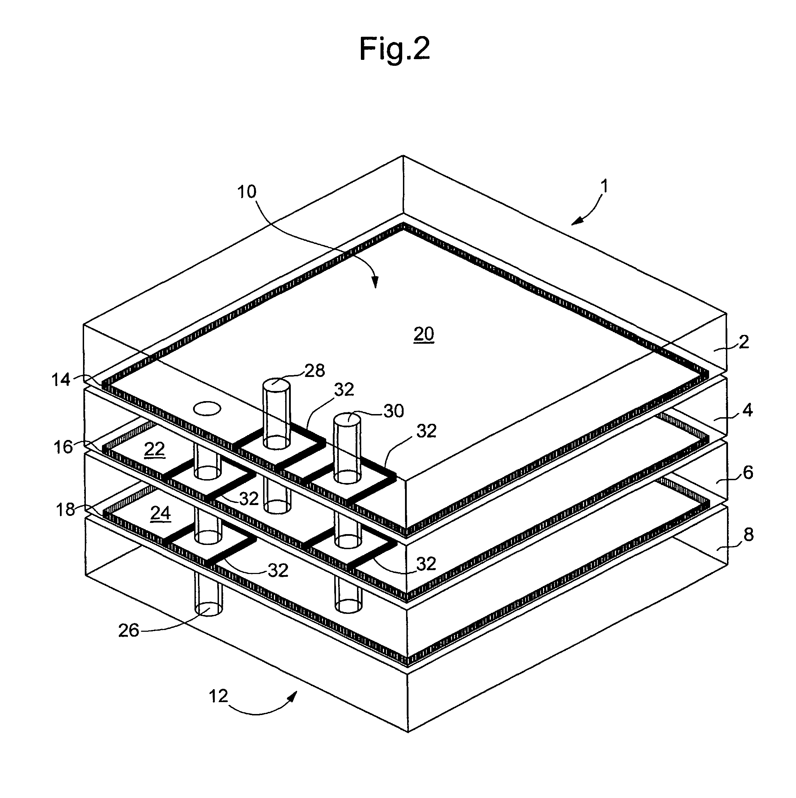

Selon un second mode de réalisation de l'invention représenté en liaison avec la figure 2, chacun des trous de remplissage traverse au moins une cavité pour atteindre celle des cavités avec laquelle il est en liaison. On peut en effet voir à la figure 2 que le trou de remplissage 26 qui est destiné à communiquer avec la cavité 20 délimitée par les premier et deuxième substrats 2 et 4 est ménagé, non pas du côté 10 de la cellule 1 comme tel était le cas précédemment, mais du côté 12 de celle-ci, ledit trou de remplissage 26 traversant de manière étanche les troisième et deuxième cavités 24 et 22 et débouchant dans la première cavité 20. Les deuxième et troisième trous de remplissage 28 et 30 restent inchangés par rapport à l'exemple représenté à la figure 1. De même, les trous de remplissage 26, 28 et 30 sont rendus étanches vis-à-vis des cavités qu'ils traversent mais dans lesquelles ils ne doivent pas déboucher, soit par adjonction de cloisons 32 en matière de scellement telles que susdécrites, soit par utilisation de microtubes ajustés à la bonne longueur.

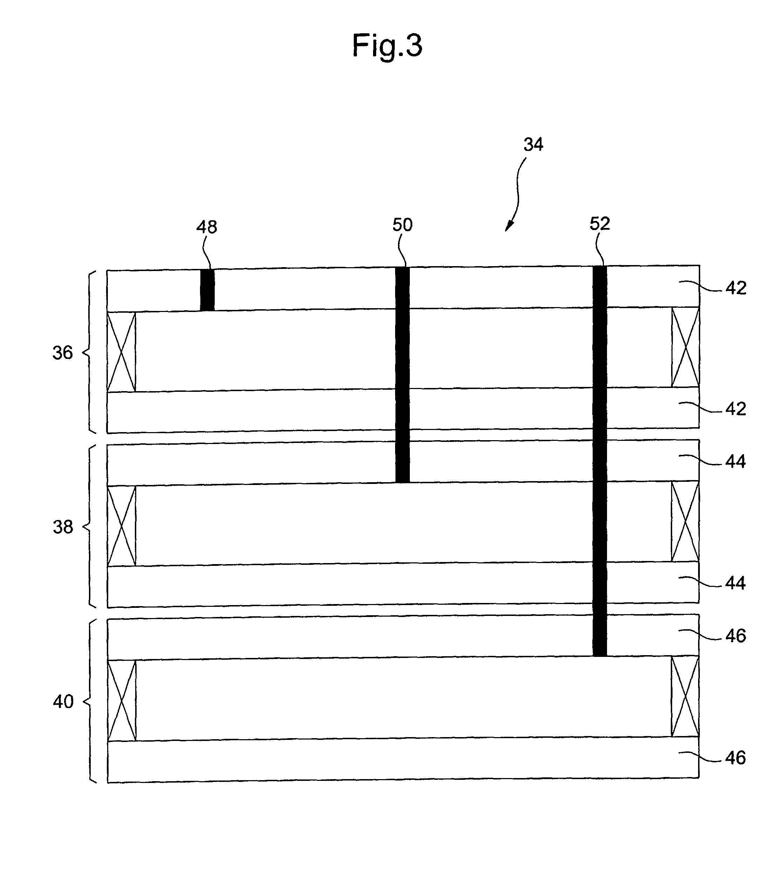

Dans tout ce qui précède, on a décrit une cellule multicouche dans laquelle les substrats intermédiaires, c'est-à-dire ceux qui ne constituent pas les faces externes de la cellule, sont en contact sur leurs deux faces avec du cristal liquide. Ainsi, par exemple, le substrat 4 délimite successivement avec le substrat 2 et avec le substrat 6 les cavités étanches 20 et 22. Bien entendu, la présente invention s'applique de manière identique au cas où la cellule multicouche est formée par une pluralité de cellules individuelles comprenant chacune deux substrats et collées les unes sur les autres. Un tel cas est représenté schématiquement à la figure 3 sur laquelle on voit qu'une cellule multicouche, désignée dans son ensemble par la référence numérique 34, est constituée par trois cellules individuelles 36, 38 et 40 collées les unes sur les autres, chaque cellule étant délimitée par une paire de substrats parallèles respectivement 42, 44 et 46. On a représenté de façon exagérée l'espace séparant deux cellules individuelles successives de façon à bien illustrer le fait que la cellule multicouche est constituée de plusieurs cellules individuelles superposées. Il va néanmoins de soi que, en pratique, les cellules individuelles sont intimement collées les unes aux autres et qu'il n'y a donc pas d'espace vacant entre le substrat inférieur d'une cellule et le substrat supérieur de la cellule suivante.

Conformément à l'invention, un premier trou de remplissage 48 est percé dans le substrat 42 qui constitue l'une des faces externes de la cellule multicouche 34 et débouche dans la cavité formée par la première cellule individuelle 36, un second trou de remplissage 50 est percé à travers les deux substrats 42 et celui des substrats 44 qui est accolé au substrat 42 pour déboucher dans la cavité formée par la seconde cellule individuelle 38, et un troisième trou de remplissage 50 est percé dans les paires de substrats 42 et 44 et dans le substrat 46 accolé au substrat 44 pour déboucher dans la cavité formée par la troisième et dernière cellule individuelle 40.

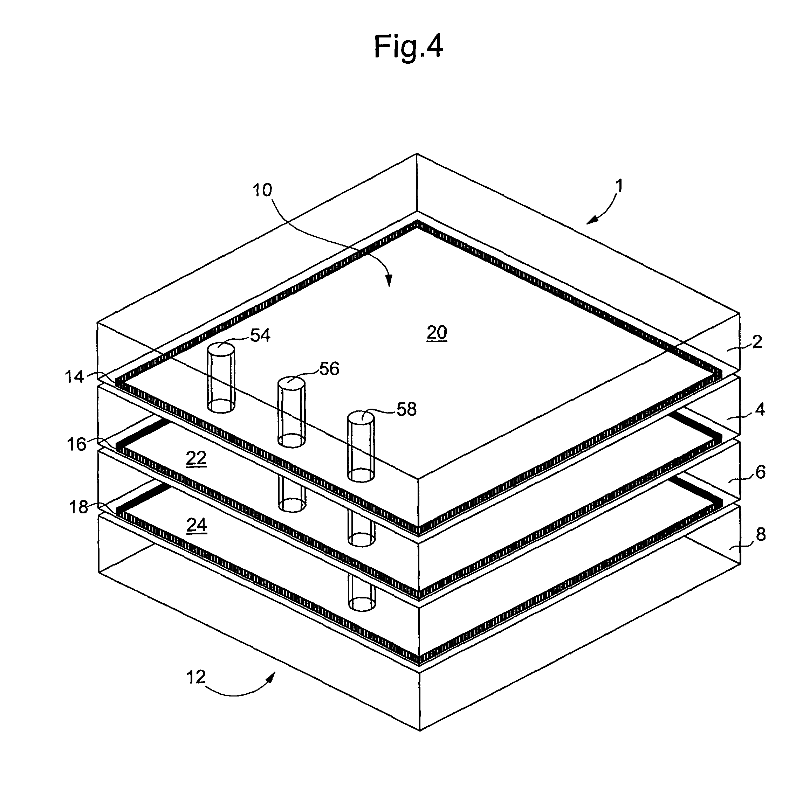

Selon une variante de réalisation représentée à la figure 4, on perce des trous dans les différents substrats 2, 4 et 6, puis on engage dans ces trous des portions de microtube, respectivement 54, 56 et 58 dont les longueurs sont ajustées pour leur permettre de traverser les différentes cavités 20, 22 et/ou 24 jusqu'à ce qu'elles débouchent dans celle des cavités avec laquelle elles sont destinées à communiquer. L'intérêt principal de ce second mode de réalisation réside dans le fait que, comme les portions de microtube sont étanches, on peut s'affranchir des cloisons en matière de scellement qui sont normalement prévues pour isoler les trous de remplissage des cavités qu'ils traversent mais dans lesquelles ils ne débouchent pas. De la sorte, l'agencement des cadres de scellement s'en trouve simplifié, et surtout l'emprise des trous de remplissage à la surface de la cellule est diminuée. La surface active de la cellule d'affichage sera donc plus grande.

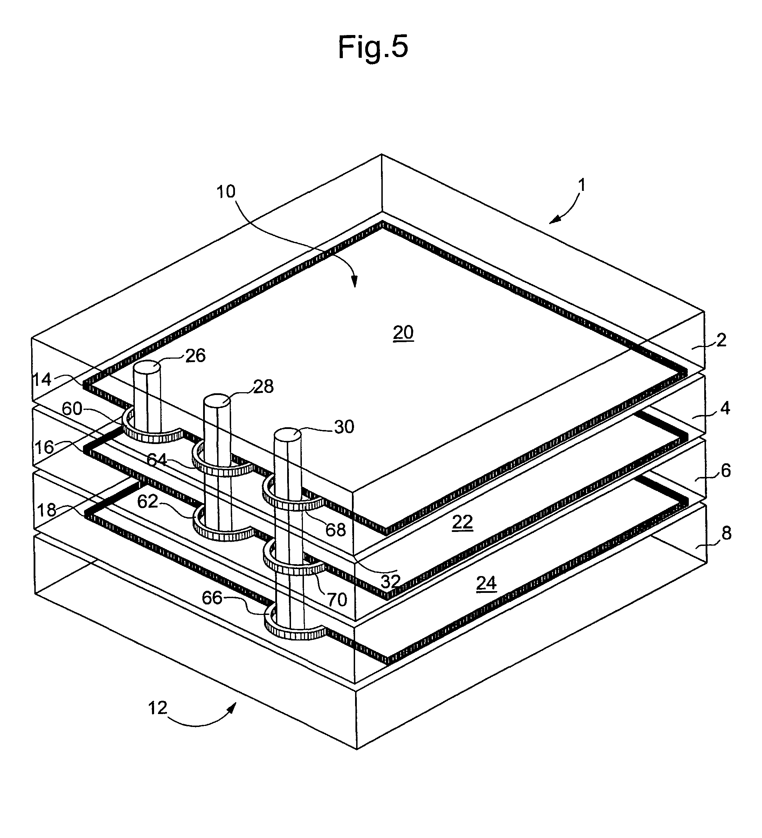

Selon une autre variante de réalisation représentée à la figure 5, les trous de remplissage 26, 28 et 30 sont prévus en-dehors du périmètre des cadres de scellement 14, 16 et 18. A cet effet, et comme cela est visible sur la figure 5, les substrats 2, 4, 6 et 8 sont prévus légèrement plus grands que les dimensions finales de la cellule recherchée. On profite de cet espace supplémentaire pour, respectivement :
- percer le premier trou de remplissage 26 à travers le premier substrat 2, ce premier trou 26 communiquant avec la cavité 20 délimitée par les premier et deuxième substrats 2 et 4 et le cadre de scellement 14, ledit cadre de scellement 14 s'écartant, localement, de sa forme générale rectiligne pour former une partie en arc de cercle 60 à l'endroit où débouche ledit premier trou 26, cette partie en arc de cercle 60 étant ouverte sur le volume intérieur de ladite cavité 20 de façon que le cristal liquide puisse y pénétrer;
- percer le deuxième trou de remplissage 28 à travers les premier et deuxième substrats 2 et 4, ce deuxième trou 28 communiquant avec la cavité 22 délimitée par les deuxième et troisième substrats 4 et 6 et le cadre de scellement 16, ledit cadre de scellement 16 s'écartant, localement, de sa forme générale rectiligne pour former une partie en arc de cercle 62 à l'endroit où débouche ledit deuxième trou 28, cette partie en arc de cercle 62 étant ouverte sur le volume intérieur de ladite cavité 22 de façon que le cristal liquide puisse y pénétrer, ce deuxième trou 28 pouvant être entouré d'une cloison 64 délimitant un volume étanche à l'endroit où il passe du premier au deuxième substrats 2, 4 afin d'éviter que le cristal liquide s'immisce entre lesdits substrats 2 et 4 et vienne mouiller le cadre de scellement 14;
- percer le troisième trou de remplissage 30 à travers les premier, deuxième et troisième substrats 2, 4 et 6, ce troisième trou 30 communiquant avec la cavité 24 délimitée par les troisième et quatrième substrats 6 et 8 et le cadre de scellement 18, ledit cadre de scellement 18 s'écartant, localement, de sa forme générale rectiligne pour former une partie en arc de cercle 66 à l'endroit où débouche ledit troisième trou 30, cette partie en arc de cercle 66 étant ouverte sur le volume intérieur de ladite cavité 24 de façon que le cristal liquide puisse y pénétrer, ce troisième trou 30 pouvant être entouré de cloisons 68 et 70 délimitant des volumes étanches aux endroits où il passe du premier au deuxième substrats 2, 4 et du deuxième au troisième substrats 4,6 afin d'éviter que le cristal liquide s'immisce entre lesdits substrats 2, 4, 6 et vienne mouiller les cadres de scellement 14 et 16.

Finalement, après remplissage des cavités, on comble les trous de remplissage avec de la matière de scellement, puis on peut découper les substrats aux dimensions voulues.

Il va de soi que la présente invention n'est pas limitée aux modes de réalisation qui viennent d'être décrits, et que diverses modifications et variantes simples peuvent être envisagées sans sortir du cadre de la présente invention. En particulier, la présente invention s'applique de manière identique à une cellule multicouche qui comprendrait, par exemple, trois couches de cristal liquide superposées, et une quatrième couche formée par un matériau semi-conducteur sensibilisé par un colorant pour constituer une cellule photovoltaïque électrochimique.

## Revendications

1. Cellule multicouche, notamment une cellule d'affichage à cristaux liquides (1), ou une cellule photovoltaïque électrochimique, ou une combinaison d'une cellule d'affichage à cristaux liquides et d'une cellule photovoltaïque électrochimique, cette cellule multicouche comprenant n substrats superposés (2, 4, 6, 8), n étant un nombre entier supérieur ou égal à trois, ces substrats (2, 4, 6, 8) étant réunis par des cadres de scellement (14, 16, 18) délimitant (n-1) cavités étanches (20, 22, 24) pour le confinement d'un milieu optiquement ou électro-optiquement actif, la surface supérieure (10) du premier substrat (2) et la surface inférieure (12) du dernier substrat (8) constituant les faces externes de la cellule (1), ladite cellule multicouche (1) étant **caractérisée en ce qu'**elle comprend (n-1) trous de remplissage (26, 28, 30) ménagés, au moins pour partie, en dessus ou en dessous de la cellule (1), ces (n-1) trous de remplissage (26, 28, 30) communiquant chacun avec une cavité différente et traversant au moins une cavité pour atteindre celle des cavités avec laquelle ils sont en liaison, lesdits (n-1) trous de remplissage (26, 28, 30) étant isolés de la ou des cavités qu'ils traversent.

2. Cellule multicouche, notamment une cellule d'affichage à cristaux liquides (1), ou une cellule photovoltaïque électrochimique, ou une combinaison d'une cellule d'affichage à cristaux liquides et d'une cellule photovoltaïque électrochimique, cette cellule multicouche comprenant n substrats superposés (2, 4, 6, 8), n étant un nombre entier supérieur ou égal à trois, ces substrats (2, 4, 6, 8) étant réunis par des cadres de scellement (14, 16, 18) délimitant (n-1) cavités étanches (20, 22, 24) pour le confinement d'un milieu optiquement ou électro-optiquement actif, la surface supérieure (10) du premier substrat (2) et la surface inférieure (12) du dernier substrat (8) constituant les faces externes de la cellule (1), ladite cellule multicouche étant **caractérisée en ce qu'**elle comprend (n-1) trous de remplissage (26, 28, 30), l'un au moins (26) de ces trous de remplissage étant percé à travers le premier (2) ou le dernier substrat (8) et communiquant avec la cavité (20) ou (24) délimitée par le premier (2), respectivement le dernier substrat (8), et le substrat (4) ou (6) en regard, les trous de remplissage (28, 30) restants étant ménagés, au moins pour partie, en dessus ou en dessous de la cellule (1), ces trous de remplissage (28, 30) communiquant chacun avec une cavité différente et traversant au moins une cavité pour atteindre celle des cavités avec laquelle ils sont en liaison, lesdits trous de remplissage restants étant isolés de la ou des cavités qu'ils traversent.

3. Cellule multicouche selon l'une quelconque des revendications 1 ou 2, **caractérisée en ce que** les trous de remplissage (26, 28, 30) sont ménagés à l'intérieur du périmètre des cadres de scellement (14, 16, 18) et sont entourés d'une cloison (32) également en matière de scellement qui les isole de façon étanche des cavités (20, 22, 24) qu'ils traversent.

4. Cellule multicouche selon l'une quelconque des revendications 1 ou 2, **caractérisée en ce que** les trous de remplissage (26, 28, 30) sont ménagés à l'extérieur du périmètre des cadres de scellement (14, 16, 18).

5. Cellule multicouche selon l'une quelconque des revendications 1 à 4, **caractérisée en ce que** les trous de remplissage (26, 28, 30) sont formés par des portions de microtube (54, 56, 58) qui traversent les différentes cavités (20, 22, 24) jusqu'à ce qu'elles débouchent dans la cavité avec laquelle elles sont destinées à communiquer.

6. Cellule multicouche selon l'une quelconque des revendications 1 à 5, **caractérisée en ce qu'**elle est formée par au moins deux cellules individuelles (36, 38, 40) collées les unes sur les autres.

## Patentansprüche

1. Mehrlagige Zelle, insbesondere eine Flüssigkristall-Anzeigezelle (1) oder eine elektrochemische photovoltaische Zelle oder eine Kombination aus einer Flüssigkristall-Anzeigezelle und einer elektrochemischen photovoltaischen Zelle, wobei diese mehrlagige Zelle n übereinander liegende Substrate (2, 4, 6, 8) umfasst, wobei n eine ganze Zahl größer oder gleich drei ist, wobei diese Substrate (2, 4, 6, 8) durch Einkapselungsrahmen (14, 16, 18), die (n - 1) dichte Hohlräume (20, 22, 24) für den Einschluss eines aktiven optischen oder elektrooptischen Medium begrenzen, vereinigt sind, wobei die obere Oberfläche (10) des ersten Substrats (2) und die untere Oberfläche (12) des letzten Substrats (8) die Außenflächen der Zelle (1) bilden, wobei die mehrlagige Zelle (1) **dadurch gekennzeichnet ist, dass** sie (n - 1) Befüllungslöcher (26, 28, 30) umfasst, die wenigstens teilweise oberhalb oder unterhalb der Zelle (1) ausgebildet sind, wobei diese (n - 1) Befüllungslöcher (26, 28, 30) jeweils mit einem unterschiedlichen Hohlraum in Verbindung stehen und durch wenigstens einen Hohlraum verlaufen, um jenen der Hohlräume zu erreichen, mit dem sie in Verbindung stehen, wobei die (n - 1) Befüllungslöcher (26, 28, 30) von dem oder den Hohlräumen, durch die sie verlaufen, isoliert sind.

2. Mehrlagige Zelle, insbesondere Flüssigkristall-Anzeigezelle (1) oder elektrochemische photovoltaische Zelle oder eine Kombination aus einer Flüssigkristall-Anzeigezelle und einer elektrochemischen photovoltaischen Zelle, wobei diese mehrlagige Zelle n übereinander liegende Substrate (2, 4, 6, 8) umfasst, wobei n eine ganze Zahl größer oder gleich drei ist, wobei diese Substrate (2, 4, 6, 8) durch Einkapselungsrahmen (14, 16, 18), die (n - 1) dichte Hohlräume (20, 22, 24) für den Einschluss eines aktiven optischen oder elektrooptischen Mediums begrenzen, vereinigt sind, wobei die obere Oberfläche (10) des ersten Substrats (2) und die untere Oberfläche (12) des letzten Substrats (8) die Außenflächen der Zelle (1) bilden, wobei die mehrlagige Zelle **dadurch gekennzeichnet ist, dass** sie (n - 1) Befüllungslöcher (26, 28, 30) umfasst, wobei wenigstens eines (26) dieser Befüllungslöcher durch das erste (2) oder das letzte Substrat (8) gebohrt ist und mit dem Hohlraum (20) oder (24) in Verbindung steht,der durch das erste (2) bzw. das letzte Substrat (8) und das jeweils gegenüberliegende Substrat (4) oder (6) begrenzt ist, wobei die verbleibenden Befüllungslöcher (28, 30) wenigstens teilweise oberhalb oder unterhalb der Zelle (1) ausgebildet sind, wobei diese Befüllungslöcher (28, 30) jeweils mit einem unterschiedlichen Hohlraum in Verbindung stehen und durch wenigstens einen Hohlraum verlaufen, um jenen der Hohlräume zu erreichen, mit dem sie in Verbindung stehen, wobei die verbleibenden Befüllungslöcher von dem oder den Hohlräumen, durch die sie verlaufen, isoliert sind.

3. Mehrlagige Zelle nach einem der Ansprüche 1 oder 2, **dadurch gekennzeichnet, dass** die Befüllungslöcher (26, 28, 30) innerhalb des Umfangs der Einkapselungsrahmen (14, 16, 18) ausgebildet sind und von einer Trennwand (32), die ebenfalls aus Einkapselungsmaterial hergestellt ist, umgeben sind, die sie dicht von den Hohlräumen (20, 22, 24), durch die sie verlaufen, isoliert.

4. Mehrlagige Zelle nach einem der Ansprüche 1 oder 2, **dadurch gekennzeichnet, dass** die Befüllungslöcher (26, 28, 30) außerhalb des Umfangs der Einkapselungsrahmen (14, 16, 18) ausgebildet sind.

5. Mehrlagige Zelle nach einem der Ansprüche 1 bis 4, **dadurch gekennzeichnet, dass** die Befüllungslöcher (26, 28, 30) durch Mikroröhren-Abschnitte (54, 56, 58) gebildet sind, die durch die verschiedenen Hohlräume (20, 22, 24) verlaufen, bis sie in den Hohlraum münden, mit dem sie kommunizieren sollen.

6. Mehrlagige Zelle nach einem der Ansprüche 1 bis 5, **dadurch gekennzeichnet, dass** sie durch wenigstens zwei einzelne Zellen (36, 38, 40), die aufeinandergeklebt sind, gebildet ist.

## Claims

1. Multi-layered cell, in particular a liquid crystal display cell (1), or an electrochemical photovoltaic cell, or a combination of a liquid crystal display cell and an electrochemical photovoltaic cell, this multi-layered cell comprising n superposed substrates (2, 4, 6, 8), n being an integer number greater than or equal to three, these substrates (2, 4, 6, 8) being joined by sealing frames (14, 16, 18) delimiting (n-1) sealed cavities (20, 22, 24) for containing an optically or electro-optically active medium, the upper surface (10) of the first substrate (2) and the lower surface (12) of the last substrate (8) forming the external faces of the cell (1), said multi-layered cell (1) being **characterised in that** it includes (n-1) filling holes (26, 28, 30) arranged, at least in part, above or underneath the cell (1), said (n-1) filling holes (26, 28, 30) each communicating with a different cavity and passing through at least one cavity to reach the cavity with which they are connected, said (n-1) filling holes (26, 28, 30) being isolated from the cavity or cavities through which they pass.

2. Multi-layered cell, in particular a liquid crystal display cell (1), or an electrochemical photovoltaic cell, or a combination of a liquid crystal display cell and an electrochemical photovoltaic cell, this multi-layered cell comprising n superposed substrates (2, 4, 6, 8), n being an integer number greater than or equal to three, these substrates (2, 4, 6, 8) being joined by sealing frames (14, 16, 18) delimiting (n-1) sealed cavities (20, 22, 24) for containing an optically or electro-optically active medium, the upper surface (10) of the first substrate (2) and the lower surface (12) of the last substrate (8) forming the external faces of the cell (1), said multi-layered cell (1) being **characterised in that** it includes (n-1) filling holes (26, 28, 30), at least one (26) of said filling holes being pierced through the first (2) or last (8) substrate and communicating with the cavity (20) or (24) delimited by the first (2), respectively the last, substrate (8) and the opposite substrate (4) or (6), the remaining filling holes (28, 30) being arranged, at least in part, above or underneath the cell (1), said filling holes (28, 30) each communicating with a different cavity and passing through at least one cavity to reach the cavity with which they are connected, said remaining filling holes being isolated from the cavity or cavities through which they pass.

3. Multi-layered cell according to any one of claims 1 or 2, **characterised in that** the filling holes (26, 28, 30) are arranged inside the perimeter of the sealing frames (14, 16, 18) and are surrounded by a wall (32) that is also made of sealing material, which isolates them in a sealed manner from the cavities (20, 22, 24) through which they pass.

4. Multi-layered cell according to any one of claims 1 or 2, **characterised in that** the filling holes (26, 28, 30) are arranged outside the perimeter of the sealing frames (14, 16, 18).

5. Multi-layered cell according to any one of claims 1 to 4, **characterised in that** the filling holes (26, 28, 30) are formed by portions of microtube (54, 56, 58) which pass through the various cavities (20, 22, 24) until they open out into the cavity with which they are intended to communicate.

6. Multi-layered cell according to any one of claims 1 to 5, **characterised in that** it is formed by at least two individual cells (36, 38, 40) bonded one on top of the other.
